Europäisches Patentamt

European Patent Office

Office européen des brevets

(11) Publication number: **0 339 593**
**A2**

## (12) EUROPEAN PATENT APPLICATION

(21) Application number: 89107514.5

(51) Int. Cl.⁴: **B26F 1/24**

(22) Date of filing: 27.04.89

(30) Priority: 27.04.88 IT 2032988

(43) Date of publication of application:
02.11.89 Bulletin 89/44

(84) Designated Contracting States:
DE ES FR GR IT

(71) Applicant: **Himont Incorporated**
**2801 Centerville Road**
**New Castle County Delaware(US)**

Applicant: **OFFICINA MECCANICA G. PRANDI**
**& C. S.p.A.**
**16, Via Sempione**
**I-28040 Marano Ticino (NO)(IT)**

(72) Inventor: **Moder Claudio, Dr.**
**2, Via Morandi**
**I-20094 Buccinasco (Milan)(IT)**

(74) Representative: **Beszédes, Stephan G., Dr.**
**Patentanwalt**
**Münchener Strasse 80a Postfach 1168**
**D-8060 Dachau(DE)**

(54) **Thermoplastic material perforated boards suitable in particular for producing containers for foodstuffs.**

(57) Thermoplastic material perforated boards particularly suitable for the production of containers for food-stuffs are obtained starting from premolded boards consisting of walls separated by hollow spaces by using a perforating device comprising a cylindrical body ending with a cone-shaped or truncated cone-shaped tip, comprising a fixed needle or a movable coaxial needle connected with a piston.

FIG. 1a

EP 0 339 593 A2

# THERMOPLASTIC MATERIAL PERFORATED BOARDS SUITABLE IN PARTICULAR FOR PRODUCING CONTAINERS FOR FOODSTUFFS

This invention relates to a device which is suitable for perforating thermoplastic material boards, in particular corrugated polypropylene boards, the process for producing the perforated boards, the boards and articles (in particular containers for foodstuffs) manufactured therefrom.

As is known, for the conservation and transport of foodstuffs containers are needed, which must be non-toxic and capable of retaining unaltered the foodstuffs as long as possible, and which must exhibit good characteristics of stoutness, lightness and cheapness.

With a view to meeting these requirements, containers are manufactured at present starting from a plastic material, such as olefinic polymers and mixtures thereof with other polymers, for example with polystyrene, properly treated in order to become practically non-toxic.

The abovesaid containers prove to be particularly stout, light and economic, but in a few cases, and in particular when they are utilized for the transport and conservation of goods having a high moisture content, such as vegetables and fruits, they may favour alterations phenomena, formation of mildews and decomposition.

The Applicant has now perfected a process for producing perforated boards made of thermoplastic materials and particularly suitable for the manufacture of containers, which, by permitting air circulation and moisture drainage through the holes, remarkably reduce the aforesaid alteration phenomena, while retaining satisfactory mechanical properties.

The thermoplastic materials which the boards are made of may be of various nature; particularly suited have proved to be the crystalline polymers and copolymers of olefins and in particular, among these, polypropylene and polyethylene.

Polypropylene means in particular both polypropylene homopolymer and the random crystalline polymers of propylene with various ethylene proportions, as well as the compositions prepared by stereospecific sequential polymerization of propylene with ethylene or with other olefins.

The perforating device utilized for the preparatin of the boards of the present invention comprises a metallic cylindrical body ending with a conical or truncated conical tip, which is heated by heating elements and comprises a fixed needle or a movable coaxial needle connected with a piston.

Cylindrical body and needle are preferably made of metals, which shall have a good thermal conductivity and, where required, high mechanical and corrosion-resistance properties, such as copper and steel.

For example, the cylindrical body may consist of a copper core, which is covered by a stainless steel shell.

The heating elements may be internal or external to the perforating device, and may be of various known types, as for example electric resistances, radiant panels, infrared lamps, heating fluids.

Preferably, the heating elements should be arranged in proximity of the needle and coaxially to it in order to favour the heating thereof, even if it was possible to ascertain the feasibility of a plate heating or a unique cylinder heating, to which the perforating units are connected.

The electric resistances may be of the armored type and may be connected with thermocouples, which permit to activate and desactivate them in order to maintain the temperature of the cylindrical body and the temperature of the needle at the desired values, what results in an energy saving (the same principle can be applied to the plates or cylinder).

For the perforation of the boards it is advisable to use batteries of perforating devices of the type described above; said batteries can be mounted on a machine equipped with a rackwork or cylinder system, which brings them into contact with the surface of the board to be perforated. The boards is caused to slide in proximity of at least one system of perforating batteries, or preferably through at least two of said systems, disposed in such a way as to allow the perforation of both the walls of the board.

It is essential that the machine should comprise a device, for example an independent double pneumatic device, which causes only the needles of the perforating devices or first the conical or truncated conical tips and then the needle to pierce the board.

The perforating device described hereinbefore is particularly suitable for the perforation of those types of boads, which substantially consist of two parallel walls separated by hollow spaces.

In fact, said device is capable of producing, in these types of boards, single holes, i.e. in a wall only, double holes, i.e. in both walls, and double "drawn" channel, i.e. an inside throttled channel formed by welding the two walls; the holes of the last type, therefore, are not communicating with the hollow spaces of the boards.

An example of plates consisting of two parallel walls separated by hollow spaces are the corrugated polypropylene boards, in which the hollow spaces have partitions which are approximately parallel with each other and perpendicular or oblique to the walls of the boards.

The process for preparing the boards comprises the perforation of premolded boards by introducing, through their thickness, batteries of conical or truncated conical metal tips and, thereafter, perforating needles arranged in coaxial position with respect to the tips, or by introducing only the perforating needles, both the conical or truncated conical tips and the perforating needles being heated to temperatures next to the softening or melting temperatures of the thermoplastic materials forming the boards.

In the case of boards consisting of two parallel walls separated by hollow spaces, such as corrugated polypropylene, the perforation by introduction of the conical or truncated conical tips and, subsequently, of the perforating needles leads to the obtainment of drawn double holes, as are described hereinbefore, by operating on both walls, while the introduction of the perforating needles only permits to obtain single holes, i.e. only in a wall, or double holes, i.e. in both walls.

In particular, the drawn double holes do not excessively alter the mechanical properties of the starting boards; in this case the boards can be thickly perforated, thereby permitting to obtain containers, in which air passage and moisture drainage are particularly favoured.

The perforated boards, which are another object of the present invention, are a semifinished product, which can be marketed as such or transformed into containers and various articles by means of known technologies.

When practising the present invention, wide variations and changes may be brought to the same, without departing from the spirit and the scope of the invention.

Annexed figures 1, 2 and 3 illustrate some aspects and preferred embodiments, which have the purpose to exemplify but not to limit the present invention.

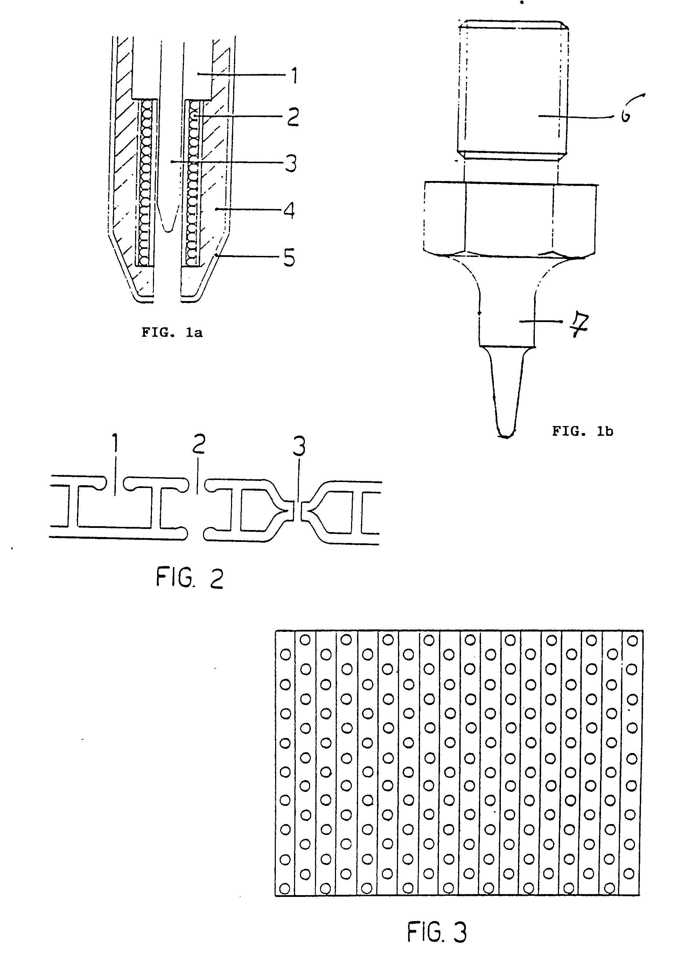

Figures 1a and 1b schematically show two examples of the perforating device, which is the object of the invention.

In figure 1a, 1 designates the chamber wherein the piston moving the perforating needle slides, 2 designates the armored heating elements, 3 the perforating needle, 4 and 5 respectively the copper core and the stainless steel shell, which constitute the cylindrical body ending with the truncated cone-shaped tip.

In figure 1b, 6 designates the cylidrical body and 7 the perforating needle.

Figure 2 shows the cross-section of a corrugated polypropylene board that has been perforated according to the process which is the object of the present invention. In this figure, 1 indicates a single hole, 2 a double hole, 3 a drawn double hole.

Figure 3 shows a frontal view of a portion of a corrugated polypropylene board, which has been perforated according to the process forming the object of the present invention.

The holes are arranged along the corrugations and have a density ranging from 10 holes/m² to 200 holes/m².

## Claims

1. Boards of thermoplastic material consisting of two walls separated by hollow spaces, having holes distributed on one wall or on both walls.

2. Boards of thermoplastic material consisting of parallel walls having holes in a wall which communicate with corresponding holes in the opposite wall through drawn channels obtained by welding the two walls.

3. The boards of claim 1 prepared starting from polypropylene boards.

4. The boards of claim 1 prepared from corrugated polypropylene boards.

5. Containers obtained from the perforated boards as claimed in claims 1 throgh 4.

6. The use of the containers of thermoplastic material as claimed in claim 5 for the conservation and the transport of foodstuffs.

7. A process for the preparation of perforated boards made of thermoplastic material, comprising the perforation of premolded boards consisting of two walls separted by hollow spaces by introducing, through their thickness, batteries of conical or truncated conical tips and then perforating needles arranged coaxially to the tips, or by introducing only the perforating needles, both the conical or truncated conical tips and the perforating needles being heated to temperatures which are next to the softening or melting temperatures of the thermoplastic material forming the boards.

8. The process for preparation of boards according to claim 7, wherein the thermoplastic material forming the perforated boards is selected from the olefin crystalline polymers and copolymers.

9. The process for the preparation of perforated boards of thermoplastic material according to claim 7 in which the premolded boards are corrugated polypropylene boards.

10. A device for perforating boards of thermoplastic material, comprising a cylindrical body ending with a conical or truncated conical tip heated by heating elements and comprising a fixed needle or a movavle coaxial needle connected with a piston.

11. The device for perforating boards of thermoplastic material according to claim 10, in which the cylindrical body comprises a copper core covered by a stainless steel shell.

EP 0 339 593 A2

FIG. 1a

FIG. 1b

FIG. 2

FIG. 3

P 4 203 EU
HIMONT INCORPORATED and
OFFICINA MECCANICA G. PRANDI & C. S.p.A.
Patentanmeldung